# EUROPÄISCHE PATENTSCHRIFT

(11) **EP 0 762 031 B1**
(45) Veröffentlichungstag und Bekanntmachung des Hinweises auf die Patenterteilung: **03.11.1999**
(21) Anmeldenummer: 96113243.8
(22) Anmeldetag: 19.08.1996
(51) Int. Cl.: F16L 3/02, F16L 3/24

(54) **Haltevorrichtung für Rohre**
Holding device for tubes
Support de retenue pour tuyaux

(30) Priorität: 29.08.1995 CH 245595
(43) Veröffentlichungstag der Anmeldung: 12.03.1997
(73) Patentinhaber: ZURECON AG, CH-8003 Zürich (CH)
(72) Erfinder: Gerster, Max, Dr.oec., 8185 Winkel (CH)
(74) Vertreter: Kägi, Otto Patentanwalt

(56) Entgegenhaltungen:
- EP-A- 0 652 662
- US-A- 2 458 670
- US-A- 4 436 266
- US-A- 5 123 619
- US-A- 5 236 158

## Beschreibung

Die Erfindung betrifft eine Haltevorrichtung für Rohre, mit einem eine seitliche Einlegeöffnung aufweisenden Rohrträger und einem zum Rohrträger verstellbaren Rohr-Niederhalter.

Für die Installation von Rohrleitungen aller Art sind sogenannte Rohrschellen sehr verbreitet. Diese bestehen im wesentlichen aus zwei halbkreisförmigen Bügeln oder Halbschalen, die zu einem das Rohr umgreifenden, geschlossenen Ring verschraubt werden, und einer vom einen Bügel abstehenden Gewindestange (oder einem Gewinderohr). Mittels letzterer wird die Rohrschelle nach Bedarf von einer Decke oder einem Träger herabhängend, seitlich von einer Wand, einer Stütze oder dgl. abstehend, oder auch stehend befestigt. Zur Schallisolierung sind Ringeinlagen aus gummielastischem Material gebräuchlich.

Bei diesen üblichen Rohrschellen ist vor allem nachteilig, dass praktisch für jeden Rohrdurchmesser eine diesem angepasste Ringgrösse verwendet werden muss, weil der geschlossene, starre Ring kaum Anpassungen an verschiedene Rohrweiten erlaubt. Die dadurch bedingte, grosse Typenvielfalt hat eine entsprechend teure Herstellung und hohe Lagerkosten zur Folge. Ferner wird bei Rohrschellen oft als Nachteil empfunden, dass diese - jedenfalls bei hängender Anordnung - keine "provisorische" Rohrauflage bieten, d.h. dass die meist mehrere Meter langen Rohrstücke zuerst anderweitig, z.B. mittels Drahtschlaufen, aufgehängt werden müssen, bis die Halbkreisbügel aller Rohrschellen miteinander verschraubt sind. Dadurch ist die Rohrmontage umständlich und kann praktisch nur von zwei Handwerkern gemeinsam ausgeführt werden. Im weiteren ist nachteilig, dass für die Distanzierung der Rohrschellen von Decke, Träger, Stütze o. dgl. zur Erreichung eines gleichmässigen Gefälles der Rohre zu jeder Schelle eine relativ genau abgemessene und zugeschnittene Gewindestange benötigt wird. Dabei ist ein nachträgliches Verstellen bzw. Nivellieren bei bereits montierten Rohren ohne grossen Aufwand nicht mehr möglich.

Eine andere Art von Rohrhaltevorrichtung, entsprechend der eingangs genannten Gattung, ist aus der CH-A-673'882 bekannt. Der Rohrträger, in den das Rohr seitlich eingelegt wird, ist dort aus einem mehrfach abgewinkelten Blechstreifen geformt, der eine V-förmige Rohrauflage bildet und mit einer Haltestange (Gewindestange oder -rohr) verbunden ist. Es sind Ausführungsvaranten für hängende oder für stehende Anordnung des Rohrträgers, d.h. mit oben bzw. unten am Rohrträger fest angebrachter Haltestange beschrieben. Bei diesen Vorrichtungen wirkt sich die mechanische Belastung ungünstig aus, indem die Tendenz zum Verbiegen des abgewinkelten Blechstreifens besteht. Ausserdem hat die Vorrichtung, bedingt durch die Breite des Blechstreifens, eine relativ grosse Ausdehnung in Richtung der Rohrachse. Dies ist nachteilig für die häufig erforderliche Wärmeisolierung der Rohre, indem zwischen den Enden der um das Rohr gelegten Isolierschalen entsprechend breite, unisolierte Lücken entstehen.

In der GB-A-2 244 087 ist eine Halterung für Kabel o.dgl. in Gestalt einer U-förmigen, relativ breiten Wanne beschrieben. Am einen U-Schenkel ist ein Niederhalter in der Höhe verstellbar befestigt, und der andere U-Schenkel ist zur seitlichen Befestigung an einer Wand ausgebildet. Zur Montage in anderen Lagen ist die Halterung nicht geeignet; ein Kabel kann nur von oben - bei entferntem Niederhalter - eingelegt werden. Eine weitere Rohrhalterung ist aus der US-A-4,436,266 bekannt. Die für jeweils nur einen einzigen Rohrdurchmesser bestimmte Vorrichtung weist eine Platte mit zwei Schenkeln und dazwischen liegender Ausnehmung für das Rohr auf. An einem oder an beiden Schenkeln ist (je) eine federbelastete, in die Ausnehmung ragende Klinke schwenkbar gelagert. In der dargestellten Lage mit nach unten offener Ausnehmung wird das Rohr von unten eingelegt und liegt dann auf der einen bzw. auf beiden Klinken auf.

Mit der vorliegenden Erfindung wird angestrebt, die den bekannten Haltevorrichtungen anhaftenden Nachteile zu beseitigen. Vor allem soll die Typenvielfalt von Rohrschellen für die vorkommenden Rohrdurchmesser reduziert und dadurch die Herstellung und Lagerhaltung verbilligt werden. Ebenso soll die Anwendung der erfindungsgemässen Haltevorrichtung einfach sein und die Rohrmontage erleichtern, indem sie eine vorgängige provisorische Fixierung der Rohre unnötig macht und die Höhenanpassung vereinfacht.

Diese Aufgabe wird erfindungsgemäss dadurch gelöst, dass der Rohrträger eine im wesentlichen ebene Platte ist, wobei im unteren Bereich der Platte ein lastaufnehmendes, das zu haltende Rohr untergreifendes Rohrbett auskragend angeformt ist und an deren einer Flachseite der Rohr-Niederhalter flach anliegend und in Bezug auf das Rohrbett höhenverschieblich fixierbar ist, und dass der Rohrträger mindestens seitlich des genannten Rohrbetts, der Einlegeöffnung gegenüberliegend, zur lösbaren Verbindung mit einem Halteteil ausgebildet ist.

Mit der erfindungsgemässen Gestaltung des Rohrträgers als ebene Platte ergeben sich wesentlich bessere mechanische Belastungsverhältnisse, und die Flachbauweise insgesamt bietet günstige Voraussetzungen für die einwandfreie thermische Isolierung praktisch ohne oder mit nur kurzen Lücken zwischen den an die Vorrichtung anschliessenden Stirnseiten der Isolierschalen. Dank dem zum Rohrträger verstellbaren und fixierbaren Rohr-Niederhalter kann ein und derselbe Rohrträger problemlos Rohre mit verschiedenen Durchmessern (in einem vorgegebenen Bereich) aufnehmen, so dass sich wesentlich weniger, in entsprechend höheren Stückzahlen zu fertigende Rohrträger-Typen ergeben. Der Rohrträger behält wegen der lösbaren Verbindung mit dem Halteteil jeweils bei hängender, stehender oder seitlicher Montage immer die gleiche Lage bei, und es können ohne weiteres verschiedene Rohrträger mit immer dem gleichen oder auch mit verschiedenen Halteteilen kombiniert werden.

Die Haltevorrichtung insgesamt besteht aus nur wenigen Einzelteilen (im wesentlichen Stanz- und Biegeteile), deren Fertigung mit geringen Kosten möglich ist. Der Halteteil kann z.B. aus einem mit Rund- oder Langlöchern versehenen, platten- oder winkelförmigen Stanzteil bestehen oder aus zwei gelochten, miteinander verschraubten Platten oder Winkeln zusammengesetzt sein; die die letzteren können teleskopartig zueinander einstellbar sein, wodurch die Nivellierung der Rohrträger bzw. der aufliegenden Rohre besonders einfach wird.

In den abhängigen Patentansprüchen sind verschiedene spezielle und vorteilhafte Ausführungsvarianten der erfindungsgemässen, im Anspruch 1 definierten Haltevorrichtung angegeben.

Nachstehend wird die Erfindung anhand verschiedener Ausführungsbeispiele in Verbindung mit der Zeichnung näher beschrieben.
- Fig. 1: ist ein Vertikalschnitt und
- Fig. 2: die Stirnansicht einer Rohrhaltevorrichtung mit C-förmigem Rohrträger gemäss einem ersten Ausführungsbeispiel,
- Fig. 3: zeigt ein Beispiel für die Anordnung mehrerer Rohrträger an einem gemeinsamen Halteteil (zwecks Vereinfachung sind die Niederhalter nicht dargestellt),
- Fig. 4, 5 und 6: zeigen eine L-förmige Variante des Rohrträgers (Darstellung des Niederhalters nur in Fig. 6) in immer gleicher Lage, aber jeweils verschiedener Lage des Halteteils, und
- Fig. 7: zeigt als Vertikalschnitt eine Ausführungsvariante des Rohrbetts.

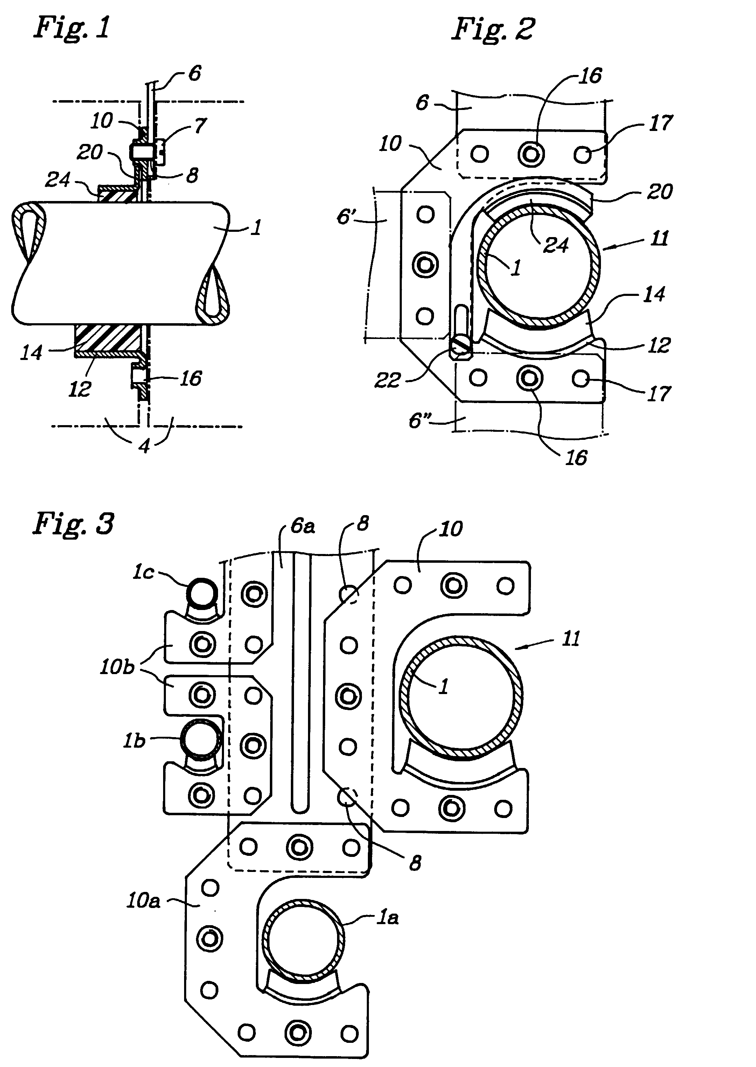

Die Figuren 1 und 2 zeigen das erste Ausführungsbeispiel einer Rohrhaltevorrichtung mit dem Rohrträger 10, der an einem Halteteil 6 z.B. hängend festgeschraubt ist und an dem ein Rohr-Niederhalter 20 verstellbar fixiert ist, um das horizontal aufliegende Rohr 1 festzuhalten. Der Rohrträger 10 ist eine im wesentlichen ebene Platte, in Gestalt eines "C" ausgestanzt, wodurch die seitliche Einlegeöffnung 11 für das Rohr 1 gebildet wird. Im unteren Bereich des "C" ist ein Rohrbett 12 auskragend angeformt. Beim vorliegenden Beispiel ist der Rohrträger 10 seitlich des Rohrbetts (der Einlegeöffnung 11 gegenüberliegend) sowie oben und unten zur lösbaren Verbindung mit dem Halteteil 6 ausgebildet, indem jeweils mittig eine angehalste Gewindebohrung 16 und zu beiden Seiten derselben je eine Prägung 17 vorgesehen sind. Die Verbindung mit dem Halteteil 6 erfolgt hier mittels einer Schraube 7, wobei die zugehörigen Prägungen in passende Bohrungen am Halteteil 6 eingreifen. Ein Halteteil 6 kann somit nicht nur oben, sondern - wie in Fig. 2 bei 6' bzw. 6" strichpunktiert angedeutet - auch zur Seite oder nach unten abstehend montiert werden, wobei der Rohrhalter 10 immer die dargestellte Lage beibehält (selbstverständlich können bei um 90° gedrehter Montage von Halteteil und Rohrhalter auch vertikal verlaufende Rohre gefasst werden).

Der Rohr-Niederhalter 20 ist gemäss Fig. 1 und 2 als "galgenförmiges" Stanzteil ausgeführt. Er wird an der einen oder der anderen Seitenfläche des Rohrträgers 10 flach anliegend fixiert mittels einer Schraube 22, die in ein entsprechendes Gewinde im Rohrträger eingreift. Zwecks Höhenverstellung am Rohrhalter, d.h. zur Anpassung an verschiedene Rohrdurchmesser, ist am vertikalen Schenkel des Niederhalters 20 ein Langloch vorgesehen. Da in den meisten Fällen eine schalldämmende Halterung der Rohre verlangt wird, sind das Rohrbett 12 des Rohrträgers, wie auch der Rohr-Niederhalter zweckmässigerweise je mit einem geeigneten gummielastischen Belag 14 bzw. 24 versehen. Diese Beläge können am betreffenden Metallteil aufvulkanisiert, aufgesteckt, geklebt, mittels durchsteckbarer Noppen fixiert oder auf andere Weise befestigt sein. Selbstverständlich sind auch Ausführungen ohne schallisolierende Beläge 14 und 24 möglich.

Bei der Rohrinstallation unter Verwendung von Haltevorrichtungen der dargestellten Art werden die Rohrträger an den in geeigneten Abständen montierten Halteteilen in der gewünschten Distanz zu Decke, Träger, Wand, Stütze o. dgl. festgeschraubt. Die Rohr-Niederhalter können bereits am Rohrträger vormontiert sein (in einer die Aufnahme des grössten Rohrdurchmessers zulassenden Ausgangsstellung) oder erst nach dem Einlegen des Rohres über diesem fixiert werden. Jedenfalls wird das Rohr 1 sogleich nach dem Einlegen durch die Oeffnungen 11 vom Rohrbett bzw. Rohrträger aller Haltevorrichtungen aufgenommen, wodurch die Arbeit erheblich erleichtert und sicherer wird, da eine provisorische Befestigung z.B. mit Drähten entfällt. Nach dem Fixieren der Niederhalter über dem Rohr mittels Schrauben 22 ist dieses definitiv festgehalten. Die Gestaltung des Rohrträgers als ebene Platte ist auch besonders günstig bezüglich der statischen Belastung durch das Rohr.

In der Fig. 1 sind Isolierschalen 4, wie sie für die Wärmeisolierung der Rohre oft benötigt werden, strichpunktiert angedeutet. Wie ersichtlich, ist dank der flachen Bauweise der Haltevorrichtung eine praktisch ununterbrochene und entsprechend wirksame Wärmeisolierung der Rohre möglich, denn zwischen den um das Rohr gelegten, seitlich an die Haltevorrichtung anschliessenden Isolierschalen 4 bleiben keine oder nur geringe Lücken bestehen; über die ebene Platte des Rohrträgers vorstehende Partien, wie Rohrbett, Schraubenköpfe usw. lassen sich ohne weiteres in das poröse Isoliermaterial der Schalen 4 hineinpressen.

Für die Gestaltung des Halteteils 6 bestehen zahlreiche Möglichkeiten. Zur Dübelbefestigung an Decken oder Wänden usw. kann er als Blechwinkel oder rohrförmige Stütze ausgebildet sein, oder zur Montage an gelochten Profilen, Konsolen etc. auch als ebene Blechplatte, jeweils in verschiedenen Längen und nach Bedarf mit Längsversteifung z.B. in Form von Längssicken oder abgekanteten Rändern. Für die Höheneinstellung bzw. nachträgliche Nivellierung der Rohre sind Langlöcher und/oder eine zusätzliche, teleskopisch verschiebbare Platte sehr zweckmässig. Anstelle von Gewindelöchern 16 zur lösbaren Montage des Rohrträgers 10 können an diesem auch ausgestanzte und verformte Blechhaken ausgebildet sein, die in entsprechende Löcher oder Schlitze am Halteteil eingreifen (nicht dargestellt).

Bei der Installation von Rohrgruppen mit mehreren parallel geführten Rohren kann mit Vorteil auch eine Anordnung etwa gemäss Fig. 3 angewendet werden. Hier sind mehrere Rohrträger 10, 10a, 10b verschiedener Grösse in unterschiedlicher Höhe, aber immer mit untenliegendem Rohrbett an einem gemeinsamen Halteteil 6a befestigt (die Rohr-Niederhalter sind in dieser Figur zwecks Vereinfachung nicht dargestellt). Der Halteteil 6a ist mit Reihen von Befestigungslöchern 8 in regelmässiger Teilung versehen, die den Abständen der Prägungen und Gewinde an den verschiedenen Halteteilen entspricht. Wie links in der Figur ersichtlich, können Rohrhalter 10b der gleichen Grösse natürlich auch Rohre 1b, 1c unterschiedlichen Durchmessers aufnehmen. Damit ist veranschaulicht, dass für die Vielzahl von vorkommenden Rohrdurchmessern eine relativ geringe Zahl unterschiedlicher Typen (Grössen) von Haltevorrichtungen ausreicht. Beispielsweise sind für Rohr-Aussendurchmesser von 15mm - 115mm lediglich vier verschiedene Typen erforderlich.

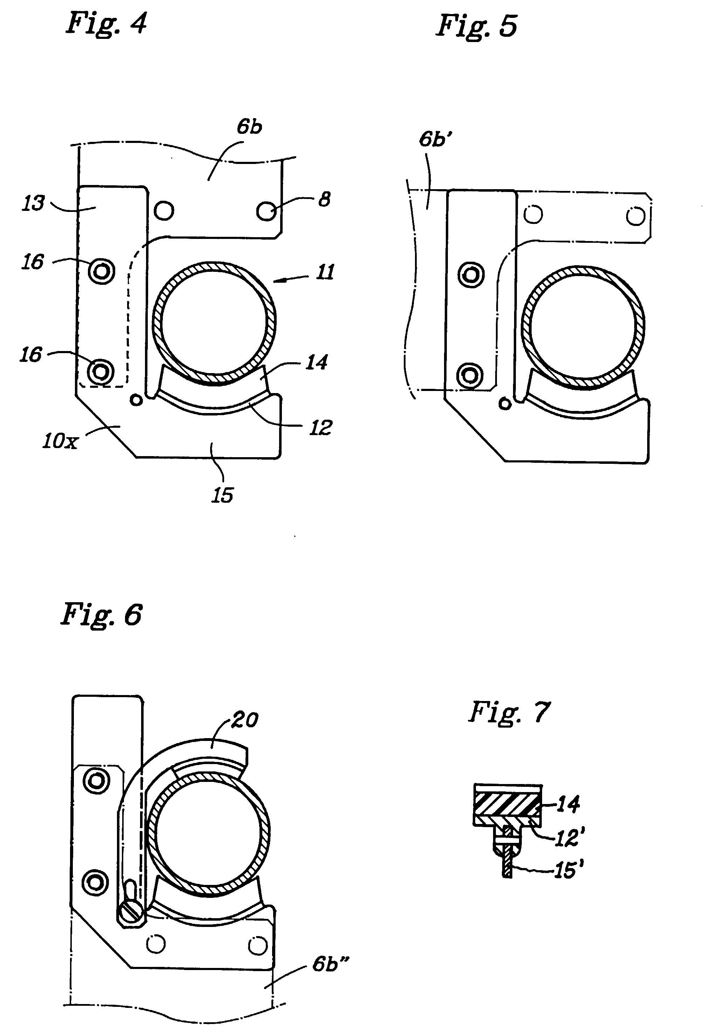

Beim Ausführungsbeispiel nach Fig. 4 bis 6 ist der Rohrträger 10x abweichend gestaltet, nämlich im wesentlichen L-förmig, jedoch ebenfalls als ebene Platte mit am unteren, horizontalen Schenkel 15 ausgebildeten Rohrbett 12 und schalldämmendem Belag 14. Der Rohr-Niederhalter ist zwecks besserer Übersicht in den Fig. 4 und 5 nicht dargestellt. Er kann (gemäss Fig. 6) etwa gleich wie in Fig. 2 oder auch abweichend ausgeführt sein. Der Rohrträger 10x ist hier nur seitlich des Rohrbetts 12, d.h. an seinem vertikalen Schenkel 13 zur Verbindung mit einem Halteteil 6b eingerichtet, und zwar mittels zwei Gewindebohrungen 16. Indem der Halteteil 6b mit zwei Paaren von Bohrungen 8, im gleichen Abstand und auf zwei zueinander senkrechten Linien angeordnet versehen ist, kann er wahlweise nach oben (6b, Fig. 4), zur Seite (6b', Fig. 5) oder nach unten (6b", Fig. 6) abstehend mit dem Rohrträger 10x verbunden werden. Sofern im Halteteil Langlöcher angebracht sind, kann der Rohrträger zudem stufenlos verschiebbar daran befestigt werden. Eine genaue Höheneinstellung der Rohrachse kann dann sehr einfach (ohne Ablängen von Gewindestangen o. dgl.) vorgenommen werden, sei es bereits vor dem Auflegen des Rohres oder nachträglich zusammen mit diesem.

Die Eigenschaften und Anwendung sind bei dieser Variante prinzipiell gleich wie beim ersten Ausführungsbeispiel nach Fig. 1 und 2. Es kann auch erwünscht sein, dass der Befestigungspunkt des Halteteils an Decke, Träger, Konsole usw. sich nicht senkrecht über oder unter der Rohrachse befindet, sondern seitlich versetzt ist (wie dies auch beim Beispiel nach Fig. 3 bezüglich der Rohre 1 und 1b, 1c der Fall ist); dies lässt sich natürlich mit einer entsprechenden Gestaltung des Halteteils leicht erreichen.

Bei der dargestellten schalldämmende Halterung des Rohres mittels gummielastischen Belägen 14, 24 lediglich am Rohrbett und am Niederhalter ist das Rohr nicht - wie bei Rohrschellen nach den Stand der Technik - am ganzen Umfang umfasst. Dies hat u.a. den Vorteil, dass gewisse Richtungsabweichungen der Rohrachse in Bezug auf die Haltevorrichtung (wie sie bei der Montage häufig vorkommen) ohne weiteres möglich sind, ohne dass dadurch die Schalldämmung beeinträchtigt wird.

Die Fig. 7 zeigt im Vertikalschnitt eine andere Ausführungsform des im unteren Bereich des Rohrträgers 10 bzw. 10x ausgebildeten Rohrbettes. Ein z.B. als Kunststoffteil ausgebildetes Rohrbett 12', versehen mit dem schalldämmenden Belag 14, ist "rittlings" auf dem flachen unteren Schenkel 15' montiert und daran mittels einem Stift, Niet o. dgl. gesichert. Eine entsprechende Ausführung ist natürlich auch am Rohr-Niederhalter möglich und zweckmässig.

## Patentansprüche

1. Haltevorrichtung für Rohre, mit einem eine seitliche Einlegeöffnung (11) aufweisenden Rohrträger (10) und einem zum Rohrträger verstellbaren Rohr-Niederhalter (20),
dadurch **gekennzeichnet**,
dass der Rohrträger (10) eine im wesentlichen ebene Platte ist, wobei im unteren Bereich der Platte ein lastaufnehmendes, das zu haltende Rohr untergreifendes Rohrbett (12, 12') auskragend angeformt ist und an deren einer Flachseite der Rohr-Niederhalter (20) flach anliegend und in Bezug auf das Rohrbett höhenverschieblich fixierbar ist, und dass der Rohrträger (10) mindestens seitlich des genannten Rohrbetts (12, 12'), der Einlegeöffnung (11) gegenüberliegend, zur lösbaren Verbindung mit einem Halteteil (6) ausgebildet ist.

2. Haltevorrichtung nach Anspruch 1, dadurch gekennzeichnet, dass das Rohrbett (12, 12') und der Rohr-Niederhalter (20) je mit einem schalldämmenden, gummielastischen Belag (14, 24) versehen sind.

3. Haltevorrichtung nach Anspruch 1 oder 2, dadurch gekennzeichnet, dass der Rohrträger (10) eine im wesentlichen C-förmige Gestalt aufweist und oben, unten sowie an der der Einlegeöffnung (11) gegenüberliegenden Seite zur lösbaren Verbindung mit dem Halteteil (6) eingerichtet ist.

4. Haltevorrichtung nach Anspruch 1 oder 2, dadurch gekennzeichnet, dass der Rohrträger (10x) eine im wesentlichen L-förmige Gestalt aufweist und an seinem vertikalen Schenkel (13) zur lösbaren Verbindung mit dem Halteteil (6b) eingerichtet ist.

5. Haltevorrichtung nach einem der vorangehenden Ansprüche, dadurch gekennzeichnet, dass der Rohr-Niederhalter (20) als Stanzteil ausgebildet und seitlich am Rohrträger (10) anliegend im Abstand zum Rohrbett (12) einstellbar ist.

6. Haltevorrichtung nach einem der Ansprüche 1 bis 5, dadurch gekennzeichnet, dass das Rohrbett (12') rittlings auf dem Rohrträger befestigt ist.

## Claims

1. Holding device for tubes, with a tube support (10) having a lateral insertion opening (11), and a tube holding-down device (20) which is adjustable with respect to the tube support (10), **characterised**
by the tube support (10) being essentially a flat plate, whereby in the lower area of the plate, a load-carrying tube bed (12, 12') that grips the tube from below projects, and whereby at a flat side of the plate the tube holding-down device (20) can be fixed flat and height-adjustable with respect to the tube bed, and in that the tube support (10) is provided at least laterally of the said tube bed (12, 12'), opposite to the insertion opening (11), for non-permanent connection with a holding part (6).

2. Holding device according to claim 1, characterised by the tube bed (12, 12') and tube holding-down device (20) each being provided with a sound-absorbing, rubber-like covering (14, 24).

3. Holding device according to claim 1 or 2, characterised by the tube support (10) being essentially C-shaped and provided for non-permanent connection with the holding part (6) at the top, bottom as well as on the side opposite to the insertion opening (11).

4. Holding device according to claim 1 or 2, characterised by the tube support (10x) being essentially L-shaped and provided at its vertical limb (13) for non-permanent connection with the holding part (6b).

5. Holding device according to one of the preceding claims, characterised by the tube holding-down device (20) being a punched part and, resting against a side of the tube support (10), can be adjusted at a distance to the tube bed (12).

6. Holding device according to one of claims 1 to 5, characterised by the tube bed (12') being fixed astride the tube support.

## Revendications

1. Support de retenue pour tuyaux, avec un support (10) présentant une ouverture d'insertion latérale (11), et un serre-flan de tuyau (20) réglable fixé au support,
**caractérisé** par le fait
que le support de tuyau (10) est essentiellement constitué d'une plaque plane, une glissière de retenue (12, 12'), supportant le poids du tuyau à maintenir par en dessous étant formée en saillie dans la partie inférieure de la plaque; que le serre-flan de tuyau (20) est fixée à plat contre l'un des côtés plats de la plaque et peut être réglé en hauteur par rapport à la glissière de retenue; et que le support de tuyau (20) est formé au moins dans une partie latérale de ladite glissière (12, 12'), face à l'ouverture d'insertion (11), pour raccordement amovible avec une pièce de maintien (6).

2. Support de retenue selon revendication 1, caractérisé par le fait que la glissière (12, 12') et le serre-flan (20) sont chacun pourvus d'une garniture insonorisante (14, 24) en caoutchouc élastique.

3. Support de retenue selon revendication 1 ou 2, caractérisé par le fait que le support de tuyau (10) présente une forme générale en C et est disposé en haut, en bas de même que sur le côté opposé à l'ouverture d'insertion (11) pour raccordement amovible à la pièce de maintien (6).

4. Support de retenue selon revendication 1 ou 2, caractérisé par le fait que le support de tuyau (10x) présente une forme générale en L et est disposé sur sa branche verticale (13) pour raccordement amovible à la pièce de maintien (6).

5. Support de retenue selon l'une des revendications précédentes, caractérisé par le fait que le serre-flan (20) est constitué d'une pièce découpée, réglable sur le côté du support de tuyau (10) par rapport à la glissière (12).

6. Support de retenue selon l'une des revendications 1 à 5, caractérisé par le fait que la glissière (12') est fixée à califourchon sur le support de tuyau.
